# EUROPEAN PATENT APPLICATION

(11) **EP 2 015 127 A1**
(43) Date of publication of application: **14.01.2009**
(21) Application number: 07425427.7
(22) Date of filing: 10.07.2007
(51) Int. Cl.: G02B 27/09, F21V 5/00, H01L 33/00

(54) **Light emitting diode with a beam shaping device for backlighting a display or a dashboard**

(71) Applicant: C.R.F. Società Consortile per Azioni, 10043 Orbassano (Torino) (IT)
(72) Inventor: Bernard, Stefano, C.R.F. Societa Consortile per Azioni, 10043 Orbassano (Torino) (IT); Bollea, Denis, C.R.F. Societa Consortile per Azioni, 10043 Orbassano (Torino) (IT)
(74) Representative: Buzzi, Franco

(57) **Abstract**

A lighting device comprises a substantially plane substrate (1) and one or more semiconductor LED light sources or chip-LEDs (2) distributed over the substrate (2) and electrically connected to conductive supply paths. Associated to each source (2) is a primary optical system (5) designed to refract the light emitted by the source so as to produce a substantially uniform illumination on a plane (P-P) substantially parallel to said substrate (1) and set at a predetermined distance (D) therefrom. Provided in the proximity of said plane (P-P) is a secondary optical system (6) for controlling the divergence of the rays of light emitted by the source and refracted by the primary optical system (5). It is thus possible to obtain a substantially uniform outcoming beam with a predetermined illuminance profile, for example a very collimated one, with a device having a very contained thickness.

## Description

The present invention relates to lighting devices of the type comprising a substantially plane substrate and one or more semiconductor light sources (LEDs or chip-LEDs), distributed over the substrate and electrically connected to conductive supply paths, suited for example for back-lighting of displays, dashboards and more in general able to generate a beam of light with controlled divergence emitted by a substantially uniform radiating area.

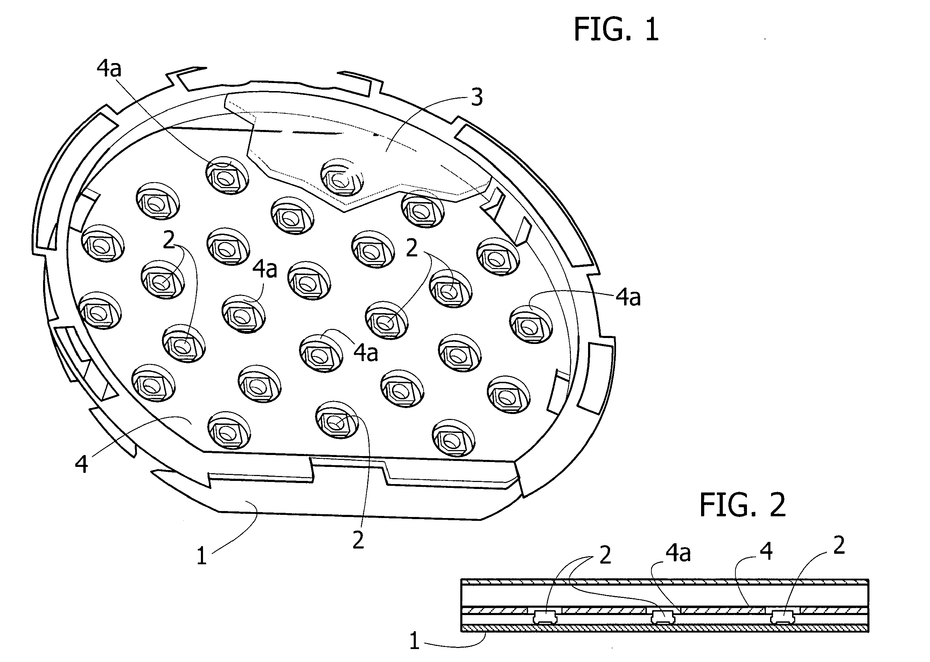

Figures 1 and 2 of the annexed sheets of drawings show, respectively, a perspective view and a schematic cross-sectional view of a back-lighting device for displays of a known type, usable for example for displays on dashboards of motor vehicles. Devices of this type comprise a substrate 1, on which a plurality of LED sources 2 of the SMD type are distributed, each of which is supplied by means of conductive paths deposited on the substrate 1 (not illustrated). Set on top of the substrate 1 and of the LED sources 2 is a diffuser element 3 of plane conformation. Once again in order to diffuse the light emitted by the sources 2, between the substrate 1 and the diffuser element 3 there is also set a back-diffuser 4 having a series of openings 4a in a position corresponding to the various LED sources 2.

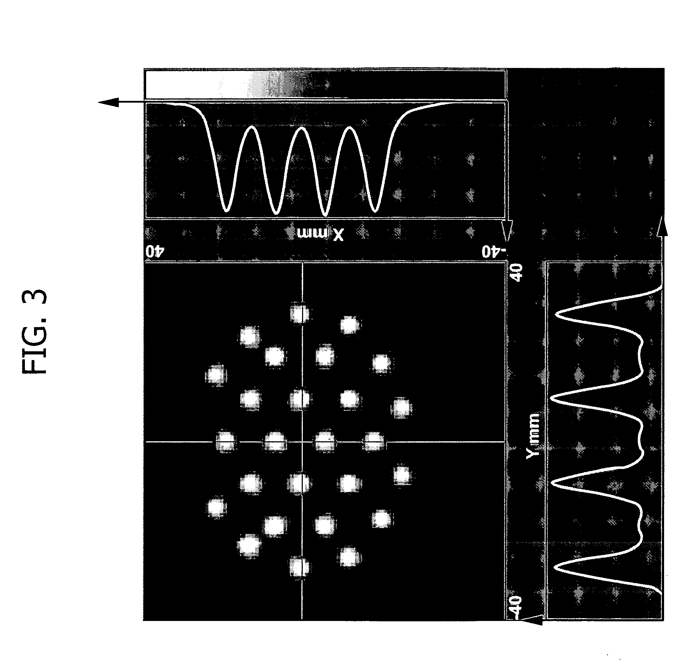

Figure 3 of the annexed sheets of drawings illustrates the typical illumination that can be obtained with the known device of Figures 1 and 2 and measured on a plane set immediately on top of the diffuser element 3. As may be seen, notwithstanding the provision of the diffuser element 3 and the back-diffuser 4, the resulting illumination is not uniform but substantially presents the so-called "dot-effect". Amongst the possible solutions for reducing said effect there may be mentioned: 1) positioning of the diffuser element 3 at a distance from the substrate 1 greater than a minimum value, typically in the region of at least 25 mm, with consequent relatively large overall dimensions of the back-lighting device; and 2) introduction, downstream of said diffuser 3 and close to it, of a further optical element with variable transmittance, said variable transmittance being maximum in the areas corresponding to a minimum illumination (for example, the areas located between two adjacent sources 2) and minimum in the areas corresponding to a maximum illumination (for example, the areas located in a position corresponding to the sources 2). The latter solution has, as compared to the previous one, the advantage of leaving the thickness substantially unaltered, but at the cost of introducing a further optical element, hence reducing the overall efficiency of the optical back-lighting system.

The purpose of the present invention is to overcome said drawbacks by providing a lighting device suitable, for example, for back-lighting displays or dashboards for motor vehicles, which will be very compact, in particular with a very contained thickness, for example less than 20 mm, and that even so will be characterized by a substantially uniform outcoming light beam with a controlled divergence (for example very small).

In particular, forming a purpose of the invention is the production of a lighting device suitable, for example, for back-lighting displays or dashboards for motor vehicles that will enable a profile of substantially uniform illumination and a controlled divergence to be obtained, for example as a whole less than 20°, on a plane set already at a distance of less than 20 mm from the LED sources.

With a view to achieving said purposes, forming the subject of the present invention is a lighting device suitable, for example, for back-lighting displays or dashboards for motor vehicles, comprising a substantially plane substrate and one or more semiconductor light sources (LEDs or chip-LEDs) distributed over said substrate and electrically connected to conductive supply paths, said lighting device being characterized in that associated to said semiconductor sources, or to each of said semiconductor sources, is a primary optical system designed to refract the light emitted by said semiconductor source so as to produce a substantially uniform illumination on a plane substantially parallel to said substantially plane substrate and set at a predetermined distance therefrom, and in that in the proximity of said plane set at a predetermined distance from said substantially plane substrate a secondary optical system is provided for controlling the divergence of the rays of light emitted by said semiconductor source and refracted by said primary optical system.

According to a further preferred characteristic of the invention, the aforesaid predetermined distance is less than 20 mm. For example, said distance can be in the region of 15 mm.

In a first embodiment, the primary optical system and the secondary optical system are defined by two elements separate from one another. In a second embodiment, the primary optical system and the secondary optical system are defined by opposite surfaces of one and the same element.

The invention applies both to the case of a single semiconductor source (LED or chip-LED) and to the case of a number of semiconductor sources (LEDs or chip-LEDs) designed to light a predetermined area: in the latter case, the device forming the subject of the present patent is made up of the sum of a plurality of sub-devices substantially identical to one another and set alongside one another, each comprising a single semiconductor source associated to a primary optical system and a secondary optical system.

The invention will now be described with reference to the annexed plates of drawings, which are provided purely by way of non-limiting example and in which:
- Figures 1-3 refer to a device according to the known art, according to what has already been described above;
- Figure 4 is a partial schematic view in cross section of a first embodiment of the device according to the invention;
- Figure 5 is a schematic cross-sectional view of a second embodiment of the device according to the invention;
- Figure 6 shows an example of the illumination that can be obtained by means of the device according to the invention (Figure 6A) and of the illumination diagram corresponding thereto (Figure 6B);
- Figure 7 shows an example of the illuminance profile that can be obtained with a single module of the device according to the present invention;
- Figure 8 is a perspective view of a device according to the invention built in conformance with the embodiment illustrated schematically in Figure 4;

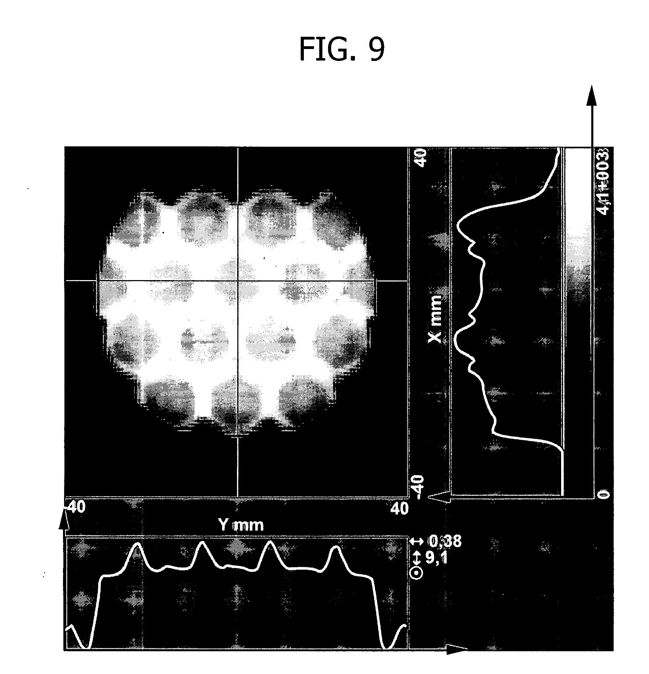

- Figure 9 illustrates the profile of illumination that can be obtained with the device of Figure 8; and
- Figure 10 illustrates at an enlarged scale a detail of Figure 4.

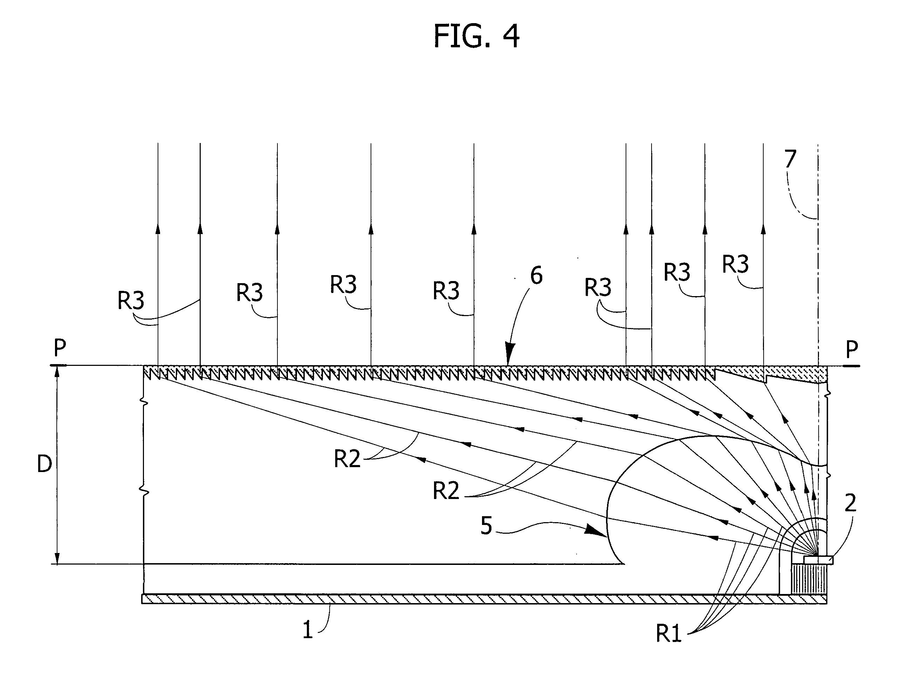

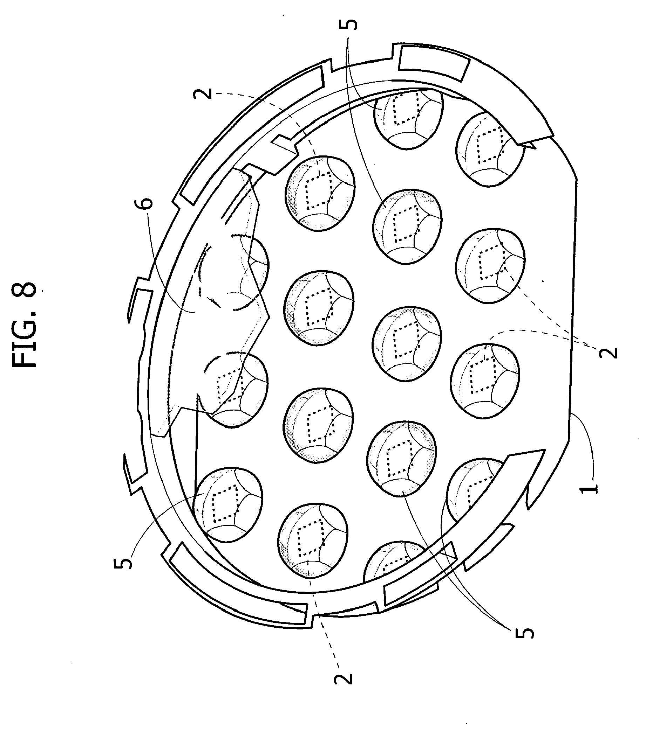

A first embodiment of the device according to the invention is illustrated in Figures 4, 8 and 10. In the case of said first embodiment, the device forming the subject of the present patent is optimized in the form of back-lighter and comprises a substrate 1 distributed on which, in a way similar to what is illustrated in Figure 1 with reference to the known device, is a plurality of light sources 2 of a compact semiconductor type, for example of the SMD LED type or the chip-LED type.

In the aforesaid first embodiment, each source 2 set on the substantially plane substrate 1 is immersed in a cap 5 constituted by a material having a refractive index n higher than 1, for example resin, polycarbonate, PMMA, or glass. Each cap 5 constitutes a primary optical system for the respective source LED 2 and has an outer surface shaped so that the light emitted by the source immersed therein is refracted on the outer surface of the cap (see rays R1 and R2 in Figure 4) in such a way as to form, on a plane P-P (Figure 4) substantially parallel to the substrate 1 and set at a predetermined distance D therefrom typically not greater than 20 mm, a substantially uniform illumination profile. This means that the illumination of the plane P-P remains substantially constant from one point to another of the plane P-P.

Each cap 5 can be obtained using processes of a type in themselves known, for example:
- the cap 5 can be directly injected around the respective source 2 in liquid or gel form through the use of a mould having an appropriate shape, with subsequent thermal curing or UV treatment for crosslinking of the resin in the desired form;
- each cap 5 can be preliminarily shaped and then set on the substrate 1 housing the sources, taking care to make in the bottom part of each cap 5 a cavity within which the respective source 2 is received; said cavity can have a substantially hemispherical shape with the centre of the area of emission of the source substantially coincident with the centre of said hemispherical surface, or else can have a generic shape designed to house the source, the space between source and cavity being then filled with material having a refractive index close to that of the cap, in order to minimize the Fresnel losses.

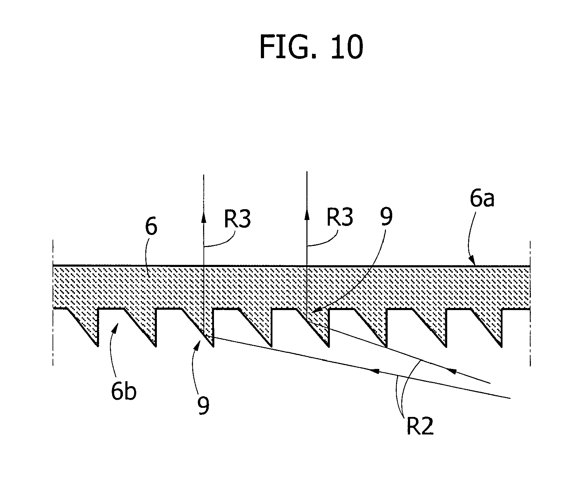

In the proximity of, and substantially parallel to, the plane P-P set at a predetermined distance from the substrate 1, on which the primary optical system forms a substantially uniform illumination profile, a secondary optical system is set, which, in the case of the embodiment illustrated in Figures 4, 8 and 10, is constituted by an element separate from the primary optical system 5, in the form of a plate 6. The plate 6 is made of a material having a refractive index n' higher than 1, for example polycarbonate or PMMA, of which at most one of the faces, for example the top face 6A (as viewed in Figure 10) is substantially plane and the other face 6B defines an optical surface, for example with circular symmetry, concentric with respect to the axis 7 passing through the centre of the cap 5 and of the emitting area of the source 2 and normal to the substrate 1. The optical surface 6b of the plate 6 is shaped so as to deviate the rays R2 (Figure 4) into rays R3 that are more collimated, according to a predetermined illuminance profile.

The profile of the optical surface 6b can be a continuous profile or else a Fresnel-lens profile, in order to reduce the overall dimensions, as illustrated in Figures 4 and 10.

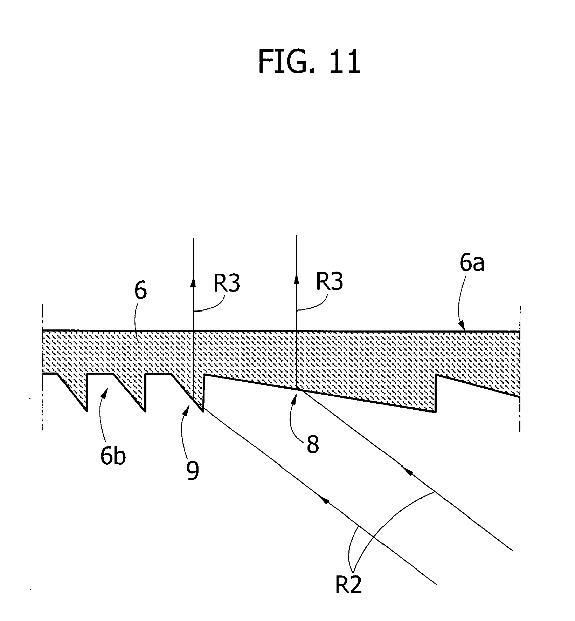

In the case of adoption of a Fresnel profile, the latter may locally be:
- "direct", i.e., the light ray R2 is refracted at input from said profile and immediately after refracted at output from said optical system (see detail 8 in Figure 11);
- "total internal reflection" (TIR), i.e., the incident light ray is refracted and immediately after reflected in TIR by said Fresnel profile (detail 9 in Figures 10,11), and then finally refracted at output from the optical system.

In the preferred embodiment, the Fresnel profile is constituted by a combination of the previous two solutions, i.e., is made up of direct regions and TIR regions so as to optimize the overall efficiency of the optical system.

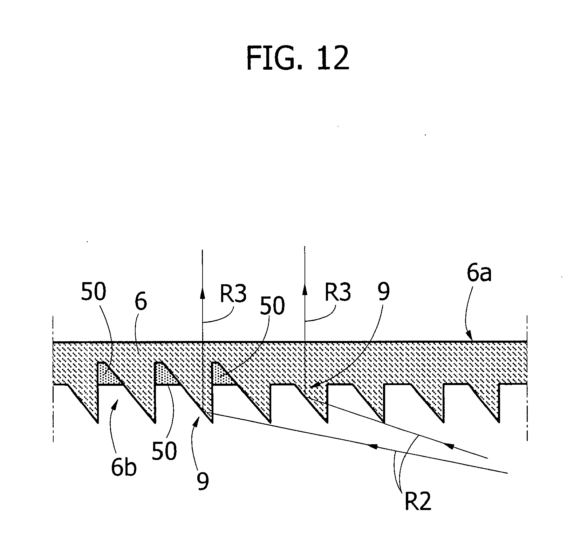

The Fresnel profile can be obtained completely within the plate 6 constituting the secondary optical system, or else can be simplified eliminating the non-optically active portions thereof (see, for example, Figure 12), i.e., those parts of a profile that are not touched by the light rays emitted by the source and deviated by the primary optical system. In this way, the aspect ratio of the profile of said secondary optical system is considerably reduced, to advantage of the simplification of the process of construction.

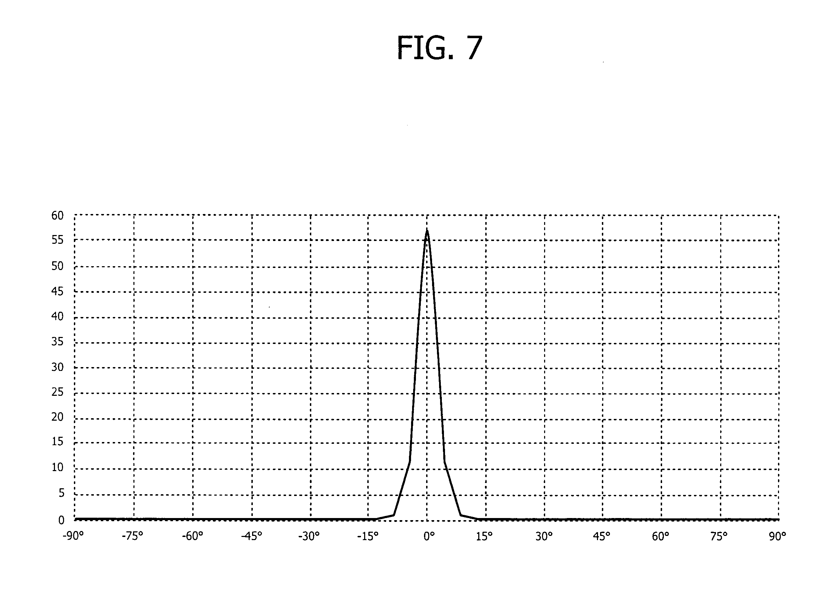

Preferably, the secondary optical system 6 is such as to minimize the divergence of the rays leaving the aforesaid plane P-P set at a predetermined distance (see the diagram of Figure 7, which illustrates how the illuminance profile is characterized by a semi-divergence of less than approximately 10°).

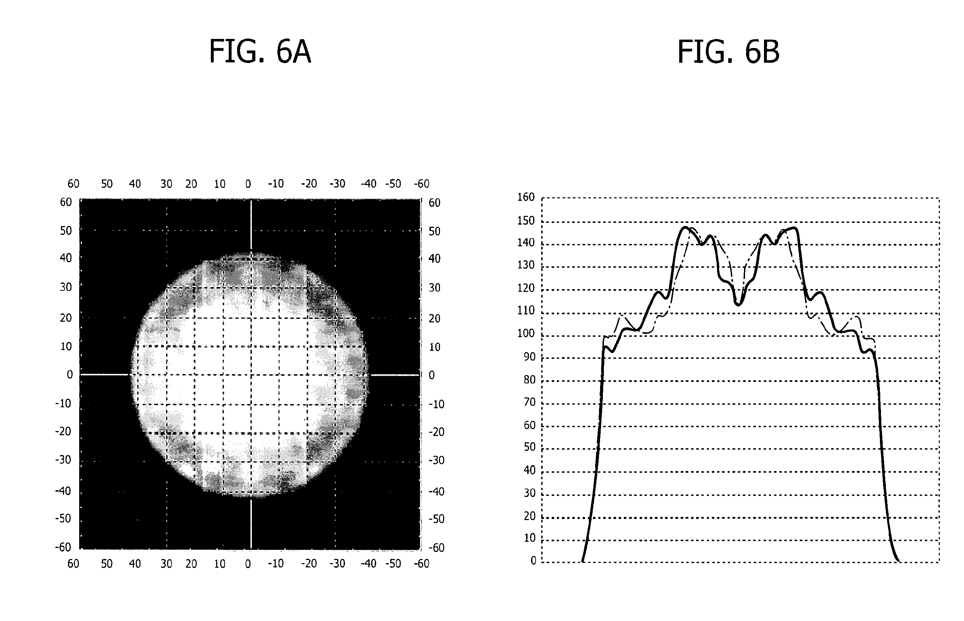

Figure 6 shows the advantages of the device according to the invention in terms of uniformity of illumination on a plane set downstream and in the proximity of the secondary optical system 6.

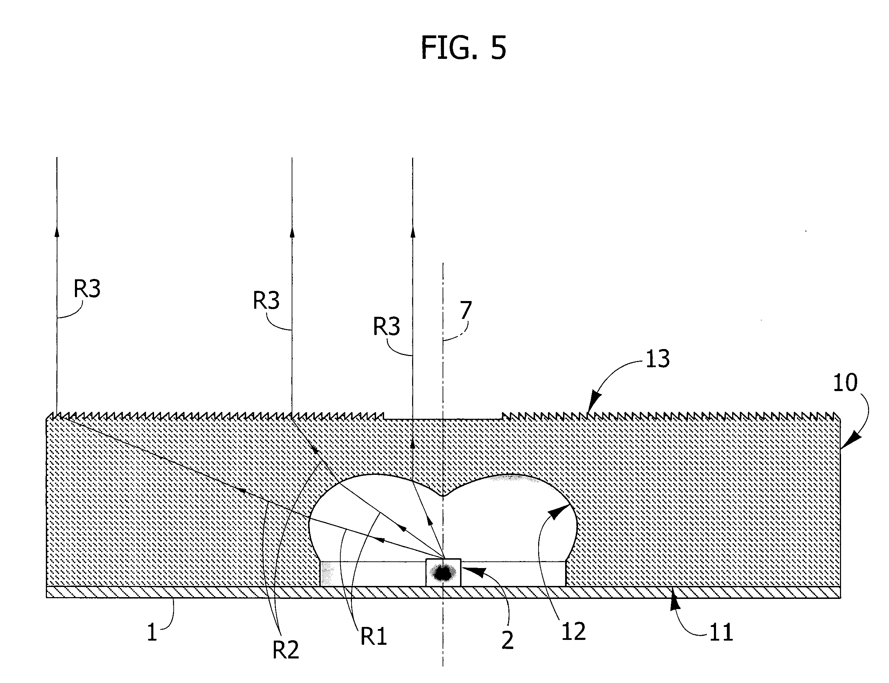

Figure 5 illustrates a second embodiment in which set on top of the substantially plane substrate 1, which houses the multiplicity of sources 2, is a plate of transparent material 10 (for example, polycarbonate or PMMA), the face 11 of which facing the substrate 1 has a multiplicity of cavities 12 (just one of which is visible in Figure 5), each in a position corresponding to a respective source 2, the surface of which, with volume of rotation with respect to the axis 7, has a profile shaped so that the rays R1 of light emitted by the source 2 are refracted into rays R2 that propagate through the plate 10 until a substantially uniform illumination profile is formed in the proximity of the plane P-P parallel to the substrate 1 and set at a predetermined distance D therefrom. As in the case of Figure 4, said distance is less than 20 mm. Said distance may, for example, be 15 mm. The top surface 13 of the plate 10 is substantially parallel and coplanar to the plane P-P and defines an optical surface with a profile with preferably circular symmetry, with centre on the axis 7 passing through the source 2, through the centre of the cavity 12 and normal to the substrate 1. The optical surface 13 is shaped in such a way as to deviate the rays R2 into outcoming rays R3 according to a predetermined illuminance profile, for example with semi-divergence of less than 10° as in the case illustrated in Figure 7.

In a further variant, the primary optical system is constituted by a plate, the bottom surface of which has cavities, each corresponding to a respective source 2 and the top surface of which defines a plurality of caps, each in a position corresponding to a respective source, shaped so that the light emitted by the underlying source is refracted and forms, on the plane P-P, a substantially uniform illumination profile. In the case of said variant, the secondary optical system is then constituted by a separate element similar to the plate 6 illustrated in Figure 4. Once again in the case of said variant, the space defined for each source 2 and the surface of the respective cavity is filled with a material having a refractive index close to that of the plate 10.

As is evident from the foregoing description, the lighting device according to the invention is based upon the idea of providing, for each source, a primary optical system and a secondary optical system in order to obtain a substantially uniform outcoming light beam with a predetermined illuminance profile, for example a very collimated one, keeping the thickness of the device very contained.

Of course, without prejudice to the principle of the invention, the details of construction and the embodiments may vary widely with respect to what is described and illustrated herein purely by way of example, without thereby departing from the scope of the present invention as defined in the annexed claims.

## Claims

1. A lighting device, usable for example for back-lighting displays or dashboards for motor vehicles, comprising a substantially plane substrate (1) and one or more semiconductor LED light sources or chip-LEDs (2) distributed over the substrate (1) and electrically connected to conductive supply paths,
said lighting device being **characterized in that** associated to the semiconductor sources or to each semiconductor source is a primary optical system (5; 12) designed to refract the light emitted by said semiconductor source (2) so as to produce a substantially uniform illumination on a plane (P-P) substantially parallel to said substantially plane substrate (1) and set at a predetermined distance therefrom; and
**in that** in the proximity of said plane (P-P) set at a predetermined distance from said substantially plane substrate (1) a secondary optical system (6; 13) is provided for controlling the divergence of the rays of light emitted by said semiconductor source (2) and refracted by the primary optical system (5; 12).

2. The lighting device according to Claim 1, **characterized in that** said predetermined distance is less than 20 mm.

3. The lighting device according to Claim 2, **characterized in that** said predetermined distance is in the region of 15 mm.

4. The lighting device according to Claim 1, **characterized in that** said primary optical system and said secondary optical system are defined by two elements (5, 6) separate from one another.

5. The lighting device according to Claim 1, **characterized in that** said primary optical system and said secondary optical system are defined by two surfaces (12, 13) of one and the same element (10).

6. The lighting device according to Claim 4, **characterized in that** the primary optical system comprises for each source (2) a cap (5) of material having a refractive index n higher than 1, having an outer surface shaped so that the light emitted by the respective source (2) immersed therein is refracted and forms on the plane (P-P) substantially parallel to the substrate (1) a substantially uniform illumination profile.

7. The lighting device according to Claim 6, **characterized in that** each cap is directly injected around the respective source (2) in liquid or gel form, through the use of a mould, with subsequent thermal curing or UV treatment.

8. The lighting device according to Claim 6, **characterized in that** each cap (5) is preliminarily shaped and then set on the substrate (1) housing the sources (2), each cap (5) having on its bottom surface a cavity that receives the respective source (2).

9. The lighting device according to Claim 8, **characterized in that** the cavity made in the bottom surface of the cap has a substantially hemispherical shape and has the centre set on the axis passing through the centre of the emitting area of the source (2) and orthogonal to the substrate (1).

10. The lighting device according to Claim 8, **characterized in that** the space between the source (2) and the surface of the cavity made in the bottom face of the cap (5) is filled with a material having a refractive index close to that of the cap.

11. The lighting device according to Claim 6, **characterized in that** the material of the cap (5) is chosen from among resin, polycarbonate, PMMA, glass.

12. The lighting device according to Claim 4, **characterized in that** the secondary optical system is constituted by a plate (6) of material having a refractive index n' higher than 1 and has one face (6a) substantially plane and the other face (6b) defining an optical surface designed to deviate the beam of incident rays according to a predetermined illuminance profile.

13. The lighting device according to Claim 12, **characterized in that** said optical surface (6b) presents circular symmetry, with centre set on the axis orthogonal to the substrate (1) passing through the centre of the emitting area of the source (2).

14. The lighting device according to Claim 13, **characterized in that** said optical surface defines a Fresnel profile.

15. The lighting device according to Claim 14, **characterized in that** said Fresnel profile is shaped for determining a refraction of the incoming light ray within said profile and subsequently a further refraction at output from said secondary optical system.

16. The lighting device according to Claim 14, **characterized in that** said Fresnel profile is shaped in such a way as to determine a refraction of the incident ray and then a total internal reflection thereof with subsequent refraction at output from the optical system.

17. The lighting device according to Claim 14, **characterized in that** said Fresnel profile is shaped in such a way as to comprise areas designed to determine a refraction of the incident ray and then a total internal reflection thereof with subsequent refraction at output from the optical system, and areas designed to determine a refraction of the incident ray and then a total internal reflection thereof with subsequent refraction at output from the optical system.

18. The lighting device according to Claim 14, **characterized in that** said optical surface (6b) corresponds to a theoretical Fresnel profile deprived of its non-optically active portions, i.e., of those parts of the profile that are not touched by the light rays emitted by the source and deviated by the primary optical system.

19. The lighting device according to Claim 5, **characterized in that** the primary optical system and the secondary optical system are defined by the opposite surfaces (11, 13) of a plate of transparent material (10) set on top of the substrate (1).

20. The lighting device according to Claim 19, **characterized in that** made on the face of said plate (10) facing said substrate (1) is a multiplicity of cavities (12), each cavity corresponding to a respective source (2) and having a surface with volume of rotation about an axis (7) orthogonal to the substrate and passing through the centre of the source (2), the surface of said cavity (12) being shaped so that the light emitted by the source is refracted by said surface to define a substantially uniform illumination profile in the proximity of the second face (13) of said plate (10).

21. The lighting device according to Claim 20, **characterized in that** defined on the face of said plate (10) opposite to the one facing the sources (2) is an optical surface (13) designed to deviate the beam of outcoming rays according to a predetermined illuminance profile.

22. The lighting device according to Claim 21, **characterized in that** said optical surface (13) is shaped according to a Fresnel profile with circular symmetry with centre set on the axis orthogonal to the substrate (1) and passing through the centre of the emitting area of the respective source (2).

23. The lighting device according to Claim 4, **characterized in that** the primary optical system is constituted by a first plate of transparent material having a refractive index higher than 1, resting on the substrate (1) and having the face close to said substrate (1) with a plurality of cavities, each cavity being provided in a position corresponding to a respective source (2), the secondary optical system being defined by a second plate set substantially in the aforesaid plane (P-P).

24. The lighting device according to Claim 23, **characterized in that** the space comprised between each source (2) and the surface of the cavity that receives it is filled with material having a refractive index close to that of the plate set on top of the substrate.

25. The lighting device according to Claim 23, **characterized in that** the surface of said plate defining the primary optical system opposite to the one facing the substrate defines a plurality of caps, each cap corresponding to a respective source (2).

26. The lighting device according to Claim 25, **characterized in that** each of said caps is shaped so that the light emitted by the source (2) is refracted and forms on the plane (P-P) of said second plate a substantially uniform illumination profile.

27. The lighting device according to any one of the preceding claims, **characterized in that** it is coupled to one or more filters set downstream of said device and designed to mask the geometry thereof.

28. The lighting device according to any one of the preceding claims, **characterized in that** it is used as back-lighting device for dashboards.

29. The lighting device according to any one of the preceding claims, **characterized in that** it is used as back-lighting device for displays.
